# EUROPÄISCHE PATENTSCHRIFT

(11) **EP 2 055 441 B1**
(45) Veröffentlichungstag und Bekanntmachung des Hinweises auf die Patenterteilung: **22.12.2010**
(21) Anmeldenummer: 08167395.6
(22) Anmeldetag: 23.10.2008
(51) Int. Cl.: B25G 1/10, B25B 7/00, H01R 43/04, H02G 1/12

(54) **Griffschale**
Grip lining
Coque de préhension

(30) Priorität: 02.11.2007 DE 202007015350 U
(43) Veröffentlichungstag der Anmeldung: 06.05.2009
(73) Patentinhaber: Weidmüller Interface GmbH & Co. KG, 32758 Detmold (DE)
(72) Erfinder: Storm, Siegfried, 33189 Schlangen (DE); Heggemann, Christian, 32758 Detmold (DE); Hetland, Detlev, 32760 Detmold (DE); Hanning, Günther, 32758 Detmold (DE); Köster, Thomas, 33189 Schlangen (DE); Wedler, Andreas, 32756 Detmold (DE)
(74) Vertreter: Dantz, Jan Henning

(56) Entgegenhaltungen:
- DE-A- 4 100 452
- DE-U1- 29 508 498
- DE-U1-202007 012 422
- GB-A- 1 468 807
- US-A1- 2005 235 786
- US-B1- 6 270 134
- US-B1- 6 473 925

## Beschreibung

Die vorliegende Erfindung betrifft eine Griffschale für einen Zangengriff gemäß dem Oberbegriff des Anspruchs 1.

Eine solche Zange geht beispielsweise aus der US 2005/0235786 hervor.

Zangengriffe sind in der Regel aus einem Isolierstoff hergestellt, handgerecht geformt und schützen bei Elektrozangen den Benutzer vor einem Stromschlag. Die Fertigung der Griffe erfolgt in der Regel durch Tauchverfahren, bei denen der Rohzangengriff in ein Bad mit flüssigem Ummantelungsmaterial eingetaucht wird oder im Spritzgussverfahren. Ein solcher Zangengriff ist aus der DE 29 705522 U1 bekannt. Die dort gezeigte und beschriebene Konstruktion hat sich in der Praxis durchaus bewährt. Nachteilig ist, dass ein in dieser Weise einmal gefertigter Zangengriff unveränderliche Abmaße besitzt. Hat ein Benutzer eine im Vergleich zum Durchschnitt sehr große Hand, wird ihm eine solche Zange nicht unbedingt gut in der Hand liegen.

Der Erfindung liegt daher die Aufgabe zugrunde, einen Zangengriff zu entwickeln, der die oben genannten Nachteile beseitigt und kostengünstig herzustellen ist.

Diese Aufgabe wird durch einen Zangengriff mit den Merkmalen des Anspruchs 1 gelöst.

Die erfindungsgemäße auf den Zangengriff aufgesetzte Griffschale ist leicht und schnell zu montieren.

Solche Griffschalen sind außerdem kostengünstig herzustellen.

Durch die Erfindung wird außerdem erreicht, dass eine Ermüdungserscheinung der Benutzerhand aufgrund einer nicht optimal auf die Handgröße angepasste Griffweite erheblich reduziert ist.

Weitere vorteilhafte Ausbildungen der Erfindung sind in den Unteransprüchen gekennzeichnet.

Nachfolgend werden Ausführungsbeispiele anhand der beigefügten Zeichnungen beschrieben. Es zeigen:
- Fig. 1: eine perspektivische Ansicht einer Zange mit aufgesetzten Griffschalen im fertig montierten Zustand.
- Fig. 2: eine perspektivische Ansicht einer Ausführungsform der aufrastbaren Griffschale, aufgesetzt auf die Zangengriffe einer Zange.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dergleichen können sich diese Bezüge ändern.

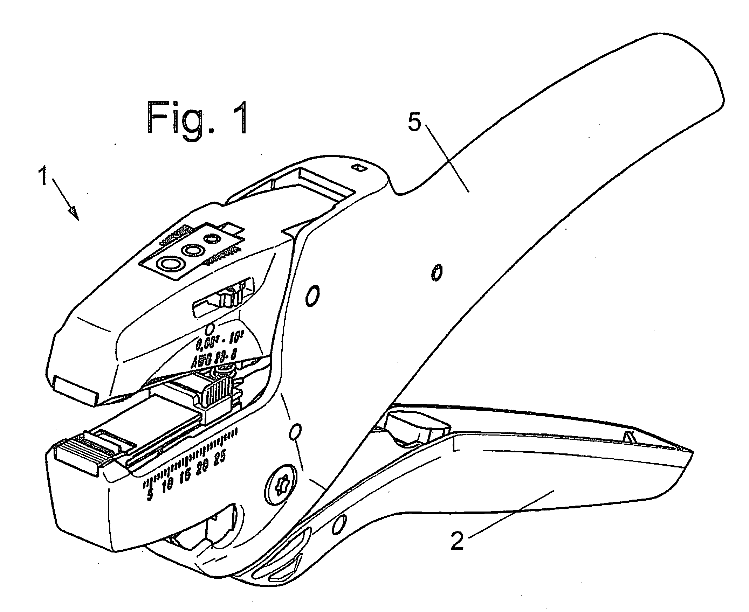

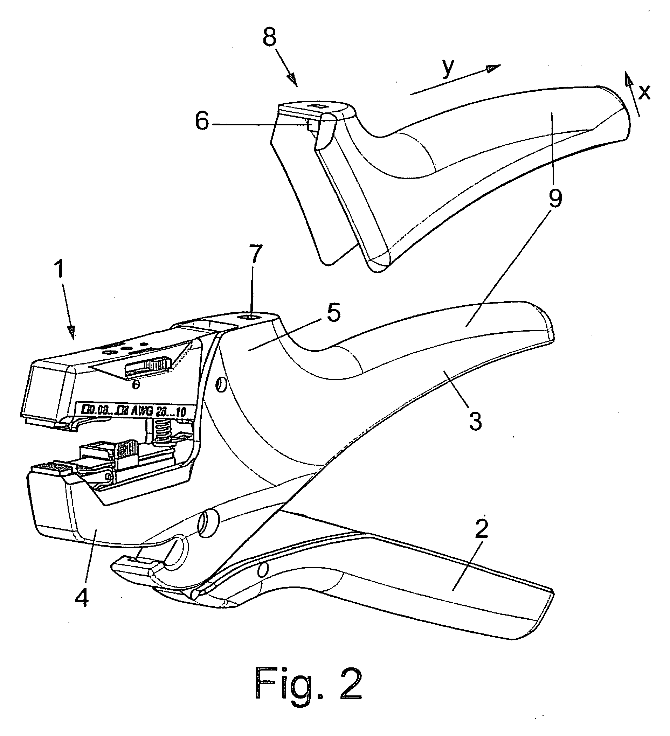

Die Fig. 1 und 2 zeigen eine Zange 1 mit zwei Handhebeln 2 und 3. Der eine Handhebel 3 ist einstückig an einer Gehäuseschale 4 ausgebildet, wohingegen der andere Handhebel 2 schwenkbar an der Gehäuseschale 4 gelagert ist.

Auf die Handhebel 2, 3 ist eine Griffschale 5 abnehmbar aufgestülpt, die je nach Handgröße des Benutzers durch eine groß- bzw. kleinvolumigere Griffschale austauschbar ist und damit eine Griffweitemodifizierung der Zange ermöglicht. In Fig. 2 ist neben einer Zange beispielhaft für die Handhebel 2 und 3 eine Ausbildungsform einer weiteren Austauschgriffschale 8 für den oberen Handhebel 3 abgebildet, der den Konturen des Handhebels 3 angepasst ist und den Handhebel 3 von vier Seiten umgreift. Wie in Fig. 2 gezeigt, ist die Griffschale 5 bevorzugt L-förmig ausgebildet. Der Griffschalenrücken 9 ist bevorzugt in einer Dimension x gewölbt. Besonders bevorzugt ist der Griffschalenrücken 9 in zwei Dimension x und y gewölbt, wobei die Wölbung in y-Richtung. Denkbar wäre auch eine dem Handhebelrücken angepasste Schiene als Griffschalenaufsatz oder eine u-formige Griffschale, die sowohl den Handhebelrücken als auch die Seitenbereiche des Handhebels 3 bedeckt. Die Fig. 2 zeigt eine auf die erste Griffschale 5 aufstülpbare weitere Griffschale 8 zur Vergrößerung der Griffiveite, so dass die den Handhebel abdeckende Griffschale 5 auf dem Handhebel verbleibt. Bevorzugt verfügt die Griffschale 5 über mindestens einen Rastzahn 6, der in eine Einrastöffnung 7 im Handhebel 3 einrastbar ist, um der Griffschale 5 einen stabilen und sicheren Halt auf dem Handhebel 3 zu gewähren.

Die erfindungsgemäßen Griffschalen werden bevorzugt aus Holz, Gummi oder besonders bevorzugt auch aus verschiedenen Kunststoffen hergestellt. Besonders bevorzugt werden für die Griffschalen Kunststoffe verwendet, die im 2-Komponentenverfahren hergestellt sind.

### Bezugszeichenliste

- 1: Zange
- 2: Handhebel 3 Handhebel
- 4: Gehäuseschale
- 5: Griffschale
- 6: Rastzahn
- 7: Einrastöffnung
- 8: Austauschgriffschale
- 9: Griffschalenrücken

## Patentansprüche

1. Zange (1) mit einem Zangengriff, vorzugsweise eine Abisolierzange, der einen Handhebel (2, 3) der Zange (1) von mindestens drei Seiten umschließt, **dadurch gekennzeichnet, dass** mindestens einer der Zangengriffe von einer ersten wechselbaren Griffschale (5) umschlossen wird und mit einer auf die erste Griffschale (5) aufstülpbaren weiteren Griffschale (8) zur Vergrößerung der Griffweite.

2. Zangengriff nach Anspruch 1, **dadurch gekennzeichnet, dass** heide Zangengriffe von einer aufstülpbaren, wechselbaren Griffschale (5, 8) umschlossen werden.

3. Zangengriff nach Anspruch 1 oder 2, **dadurch gekennzeichnet, dass** die Griffschale (5, 8) mindestens einen Rastzahn (6) aufweist, der mit einer Einrastöffnung (7) im Zangengriff verrastbar ist.

4. Zangengriff nach den Anspruchen 1-3, **dadurch gekennzeichnet, dass** die Griffschale (5, 8) L-förmig ausgebildet ist.

5. Zangengriff nach den Ansprüchen 1-4, **dadurch gekennzeichnet, dass** ein Griffschalenrückenn (9) in einer Dimension (x) gewölbt ausgebildet ist.

6. Zangengriff nach den Ansprüchen 1-3, **dadurch gekennzeichnet, dass** der Griffschalenrücken (9) in zwei Dimensionen (x, y) gewölbt ausgebildet ist.

7. Zangengriff nach Anspruch 1 oder 2, **dadurch gekennzeichnet, dass** die Griffschale aus Kunststoff oder Gummi hergestellt ist

8. Zangengriff nach Anspruch 1 oder 2, **dadurch gekennzeichnet, dass** die Griffschale aus Holz hergestellt ist.

9. Zangengriff nach Anspruch 7, **dadurch gekennzeichnet, dass** die Griffschale aus Kunststoff im 2-Komponentenverfahren hergestellt ist.

## Claims

1. Pliers (1), preferably wire stripping pliers, with a pliers handle enclosing a hand lever (2, 3) of the pliers (1) from at least three sides, **characterised in that** at least one of the pliers handles is enclosed by a first exchangeable handle shell (5), and **in that** is comprises a further handle shell (8) which can be telescoped onto the first handle shell (5) in order to increase the width of the pliers.

2. Pliers handle according to claim 1, **characterised in that** both of the pliers handles are enclosed by an exchangeable handle shell (5, 8) capable of telescoping.

3. Pliers handle according to claim 1 or 2, **characterised in that** the handle shell (5, 8) comprises at least one latching tooth (6) which can be latched into a latching opening (7) in the pliers handle.

4. Pliers handle according to claims 1 to 3, **characterised in that** the handle shell (5, 8) is L-shaped.

5. Pliers handle according to claims 1 to 4, **characterised in that** a handle shell back (9) is domed in one dimension (x).

6. Pliers handle according to claims 1 to 3, **characterised in that** the handle shell back (9) is domed in two directions (x, y).

7. Pliers handle according to claim 1 or 2, **characterised in that** the handle shell is made of plastic or rubber.

8. Pliers handle according to claim 1 or 2, **characterised in that** the handle shell is made of wood.

9. Pliers handle according to claim 1 or 2, **characterised in that** the handle shell is made of plastic in a 2-component process.

## Revendications

1. Pince (1) avec une poignée de pince, de préférence une pince isolante, qui entoure un levier manuel (2, 3) de la pince sur au moins trois côtés,
**caractérisée en ce qu'**au moins l'une des poignées de pince est entourée par une première coque de préhension (5) interchangeable et avec une autre coque de préhension (8) pouvant être enfilée sur la première coque de préhension (5) pour augmenter la largeur de prise.

2. Poignée de pince selon la revendication 1, **caractérisée en ce que** les deux poignées de pince sont entourées par une coque de préhension (5, 8) interchangeable et enfilable.

3. Poignée de pince selon la revendication 1 ou 2, **caractérisée en ce que** la coque de préhension (5, 8) présente au moins une dent de crantage (6), qui peut se cranter avec une ouverture de crantage (7) dans la poignée de pince.

4. Poignée de pince selon l'une des revendications 1 à 3, **caractérisée en ce que** la coque de préhension (5, 8) est réalisée en forme de L.

5. Poignée de pince selon l'une des revendications 1 à 4, **caractérisée en ce qu'**un dos de coque de préhension (9) est réalisé incurvé dans une dimension (x).

6. Poignée de pince selon l'une des revendications 1 à 3, **caractérisée en ce que** le dos de coque de préhension (9) est réalisé incurvé dans deux dimensions (x, y).

7. Poignée de pince selon la revendication 1 ou 2, **caractérisée en ce que** la coque de préhension est fabriquée en matière plastique ou en caoutchouc.

8. Poignée de pince selon la revendication 1 ou 2, **caractérisée en ce que** la coque de préhension est fabriquée en bois.

9. Poignée de pince selon la revendication 7, **caractérisée en ce que** la coque de préhension est fabriquée en matière plastique par un procédé à deux composants.
